# EUROPÄISCHE PATENTSCHRIFT

(11) **EP 1 378 771 B1**
(45) Veröffentlichungstag und Bekanntmachung des Hinweises auf die Patenterteilung: **06.10.2010**
(21) Anmeldenummer: 03019103.5
(22) Anmeldetag: 14.03.1997
(51) Int. Cl.: G02B 6/00

(54) **Innenraumleuchte**
Interior lighting
Eclairage intérieur

(30) Priorität: 04.12.1996 DE 19650295
(43) Veröffentlichungstag der Anmeldung: 07.01.2004
(62) Teilanmeldung aus: 97104417.7
(73) Patentinhaber: Siteco Beleuchtungstechnik GmbH, 83301 Traunreut (DE)
(72) Erfinder: Ferdows, Sonja, 83278 Traunstein (DE); Leibig, Joachim, 83374 Oderberg (DE); Susemihl, Ingo, 83308 Trostberg (DE)
(74) Vertreter: Schohe, Stefan

(56) Entgegenhaltungen:
- EP-A- 0 442 529
- EP-A- 0 479 042
- EP-A- 0 560 605
- EP-A- 0 573 268
- WO-A-89/02606
- WO-A-94/09311
- US-A- 5 396 350
- US-A- 5 555 109

## Beschreibung

Die Erfindung bezieht sich auf eine Innenraumleuchte.

Ein wesentliches Problem der Innenraumbeleuchtung, insbesondere bei der Bürobeleuchtung besteht darin, einerseits auf einer zu beleuchtenden Fläche des Innenraumes eine vorzugsweise gleichmäßige, jedenfalls aber ausreichende Beleuchtungsstärke zu erzielen, gleichzeitig aber - und das gilt insbesondere für Arbeitsplätze, vor allem auch für Bildschirmarbeitsplätze - eine unerwünschte Blendung durch die gewählte Beleuchtung auszuschließen. Besonders kritisch ist dabei die Reflexblendung, hervorgerufen durch Lichtreflexionen auf Arbeitsflächen oder Arbeitsmitteln, wie z. B. einem Monitor.

Da diese Problemstellung bekannt ist, wurde dazu auch bereits eine Vielzahl von Lösungsvorschlägen gemacht. Gemeinsam ist diesen bekannten Lösungen, eine entsprechende Innenraumleuchte so auszugestalten, daß einerseits ihre Leuchtdichte trotz hoher Lichtstärke einen vorgegebenen Wert nicht übersteigt und ferner die Lichtstärkeverteilung der Leuchte durch gezielte Lichtlenkung so ausgebildet ist, daß dabei ein vorgegebener Abblendwinkel γ, gemessen gegen die Vertikale, eingehalten wird. Ein typisches Beispiel für einen Leuchtentyp, mit dem diese Bedingungen für eine Querentblendung,mit gewissen Einschränkungen auch eine Längsentblendung zu erfüllen sind, ist die Spiegelrasterleuchte. Deren lichttechnisches Prinzip besteht - bezogen auf den hier vorliegenden Fall betrachtet - darin, eine möglichst große Lichtmenge durch eine relativ kleine Lichtaustrittsöffnung so gelenkt abzustrahlen, daß die genannten Bedingungen noch eingehalten sind. Wesentlichen Anteil an der Lichtlenkung hat dabei das aufwendige und in seiner Herstellung teure Spiegelraster.

Wenn man von den sogenannten Indirektleuchten absieht, die das Licht vor allem gegen die Raumdecke und gegebenenfalls auch oberhalb des normalen Sichtbereiches liegende Wandteile abstrahlen, besteht eine weitere Möglichkeit, den genannten Abstrahlungsbedingungen zu genügen, darin, die der zu beleuchtenden Fläche zugekehrte Lichtaustrittsöffnung der Inneraumleuchte zu vergrößern.

Aus EP-B1-0 665 936 ist ein Beispiel für einen derartigen Lösungsansatz bekannt, in der eine Leuchte mit langgestrecktem Leuchtmittel und Reflektoren beschrieben ist, die sich "vogelschwingenartig" bis in die Nähe von Deckenelementen erstrecken, an denen die Leuchte befestigt ist. Die Ausgestaltung der Reflektorflächen als solche bedeutet bei dieser Leuchte eine gegenüber einer Spiegelrasterleuchte relativ große Lichtaustrittsfläche. Daneben wird als weiterer Vorteil angesehen, daß aufgrund der Reflektorkontur auch ein Teil des Lichtes an die die Leuchte umgebende Deckenfläche abgestrahlt wird und sich bei hohem Leuchtenwirkungsgrad eine angenehme, ruhige und tageslichtähnliche Lichtwirkung einer Leuchte ergibt, die auch in Räumen mit Bildschirmarbeitsplätzen eingesetzt werden kann.

Aus EP-B1-0 371 073 ist ferner eine Vorrichtung mit einer Lichtleiterplatte bekannt, in der Licht - ausgehend von einer Lichtquelle - mit Komponenten parallel zu den großen Plattenflachen geführt wird und aus Erhebungen austritt, die auf der Oberfläche einer dieser Plattenflächen mit einer dazwischen aufgebrachten Haftschicht dicht an dicht angeordnet sind sowie nach Höhe und Breite in der Größenordnung zwischen 0,5 und 0,001 mm liegen. Dabei wird davon ausgegangen, daß bei Erhebungen dieser Größenordnung deren abstrahlende Fläche in der Projektion auf einen Betrachter etwa mit der Untergrenze des Auflösungsvermögens des menschlichen Auges zusammenfällt. Aus dieser optischen Überlegung wird abgeleitet, daß die gesamte abstrahlende Fläche gleichmäßig hell erscheint.

Es mag zwar zutreffen, daß eine Vielzahl kleiner, geometrisch etwa im Auflösungsbereich des menschlichen Auges nahe beieinander liegender Lichtpunkte dann dem Betrachter als eine geschlossene Fläche erscheint, wenn er die Einzelpunkte nicht mehr voneinander_unterscheiden kann. Dies ist aber noch nicht gleichbedeutend mit einer gleichmäßigen Leuchtdichteverteilung über die gesamte abstrahlende Fläche, die gerade bei der Lichtauskopplung aus Lichtwellenleitern problematisch ist. Ebensowenig ist damit auch bereits eine Lösung für das Blendungsproblem gegeben.

In diesem Zusammenhang wird zur Erläuterung z. B. auf EP-B1-0 479 042 verwiesen. Dort wird - vereinfacht - die Erkenntnis dargelegt, daß eine mit ihrer Projektion etwa im Auflösungsbereich des menschlichen Auges liegende, somit nahezu punktförmige Fläche unabhängig von dem absoluten Wert ihrer Leuchtdichte nur dann keine Reflexblendung hervorruft, wenn außerdem ihr Abstand zu gleichartigen Nachbarflächen aureichend groß ist. Erklärt wird dieser Effekt damit, daß Reflexblendung darauf beruhen soll, daß gleichzeitig mehrere benachbarte Sehnerven des Auges durch zu hohe Lichtreize erregt werden. Da nach der Lehre der oben zitierten bekannten Vorrichtung Mikroerhebungen dicht an dicht zu packen sind, müßte demnach die Leuchtdichte der lichtabstrahlenden Fläche entsprechend niedrig gewählt werden, um Blendung zu vermeiden.

Abgesehen davon wird der Leuchtenwirkungsgrad einer solchen Innenraumleuchte nicht nur von der Art der Auskopplung des in der Lichtleiterplatte transportierten Lichtes sondern auch von der Einkopplung dieses Lichtes in die Lichtleiterplatte wesentlich beeeinflußt. Dazu werden zwei Lösungsmöglichkeiten angegeben. Im einen Fall wird als Einkoppelelement eine Mehrschichtplatte vorgeschlagen, deren Schichten zur gezielten Lichtlenkung in Strahlrichtung des von der Lichtquelle eingestrahlten Lichtes optisch immer dichter werden. Das bedeutet, abgesehen von dem auch technologischen Aufwand, zwangsläufig Mehrfachreflexionen des Lichtes bereits beim Einkoppeln mit entsprechenden Lichtverlusten. Als weitere Möglichkeit wird ein dachförmig über der Lichtquelle angeordneter planer Reflektor vorgeschlagen. Dieser Vorschlag ist zwar einfacher zu realisieren, führt aber, wie sich erwiesen hat, nicht zu befriedigenden Ergebnissen. Mit der in EP-B1-0 371 073 angegebenen Lehre ist somit zwar eine Richtung angegeben, daß unter Verwendung von Lichtwellenleitern eine Innenraumleuchte rasterlos gestaltet werden könnte, es wird damit aber noch nicht eine lichttechnisch befriedigende, den üblichen Anforderungen hinsichtlich Leuchtenwirkungsgrad und auch Blendfreiheit genügende Lösung vermittelt.

Ferner sind aus US-A-5 396 350 sowie US-A-5 555 109 Beleuchtungsanordnungen bekannt, die bei geringem Querschnitt insbesondere im Hinblick auf die Anwendung zur Hintergrundbeleuchtung von elektronischen Sichtgeräten optimiert sind. Dabei wird das von einer Lichtquelle diffus abgestrahlte Licht seitlich in eine Lichtleiterplatte eingekoppelt und in dieser mittels Totalreflexion transportiert. Auf eine der Oberflächen der Lichtleiterplatte ist unmittelbar ein Raster von Mikroprismen mit einer parallel zur Lichteintrittsfläche liegenden Lichtaustrittsoberfläche aufgebracht. Dabei besitzt jedes Mikroprisma mindestens eine Seitenwand, die in einem vorgegebenen Winkel vertikal zur Oberfläche der Lichtleiterplatte derart geneigt ist, daß von der Lichtleiterplatte in das Mikroprisma eintretendes Licht an dieser geneigten Seitenwand reflektiert wird und im wesentlichen senkrecht zu der Lichtaustrittsfläche der Mikroprismen austritt. Zusätzlich kann auf der Lichtaustrittsfläche der Mikroprismen ein Raster von Mikrolinsen vorgesehen sein, um das von den Mikroprismen abgestrahlte Licht weiter zu bündeln. Mit der bekannten Beleuchtungsanordnung sollen insbesondere die bekannten Nachteile von Flüssigkristallanzeigeeinheiten behoben werden, bei denen der Kontrast bei hohen Betrachtungswinkeln (große Winkel bezogen auf die Normale zur Oberfläche der Anzeigeeinheit) zu wünschen übrig läßt sowie darüberhinaus die visuelle Farbart von diesem Betrachtungswinkel abhängig ist.

WO 96/23166 A1 beschreibt eine Leuchte, die eine Lichtquelle und einen senkrecht quer zu dieser Lichtquelle angeordneten Lichtleiter aufweist, wobei der Lichtleiter auf seiner Unterseite, welche die Lichtaustrittsseite der Leuchte bildet, eine aus Mikroprismen bestehende Prismenstruktur aufweist. Es wird in dieser Druckschrift vorgeschlagen, diese Leuchte zur Raum- oder Bürobeleuchtung zu verwenden und insbesondere von einer Decke aus Objekte an einer Wand zu beleuchten.

DE 42 05 137 A1 beschreibt eine Leuchte, bei welcher das Licht einer Lampe in eine Lichtleitscheibe an einer Schmalseite eingekoppelt wird, wobei das Licht, welches an der gegenüberliegenden Schmalseite der Lichtleitscheibe austritt, auf einen Reflektor einfällt, der das Licht umlenkt, Gemäß dieser Druckschrift kann bei einer Leuchte mit einer Lichtleitscheibe, vor der Lichtaustrittsfläche eine Prismenrasterscheibe vorgesehen sein.

Der vorliegenden Erfindung liegt die Aufgabe zugrunde, eine Innenraumleuchte der eingangs genannten Art zu schaffen, die im Hinblick auf den Leuchtenwirkungsgrad und die Einhaltung von Entblendungsbedingungen mit konventionellen Leuchtentypen, wie z. B. Spiegelrasterleuchten, durchaus vergleichbar ist, dabei aber von dem Prinzip ausgeht, das von einer Lichtquelle abgestrahlte Licht, unter Verwerdung eines Lichtwellenleiters auf eine im Vergleich zu konventionellen Innenraumleuchten relativ große lichtabstrahlende Fläche gleichmäßig und mit gutem Wirkungsgrad zu lenken und unter Einhaltung der bekannten Entblendungsbedingungen abzustrahlen.

Diese Aufgabe wird gelöst durch eine Innenraumleuchte nach Anspruch 1.

Die Erfindung kann vorsehen, daß der Lichtquelle zugeordnet ein Hauptreflektor vorgesehen ist, der gemeinsam mit der Lichtquelle in Bezug auf einen zur Lichteintrittsfläche des Lichtleiters senkrechten und in Haupttransportrichtung des in diesen eingestrahlten Lichtes liegenden Querschnitt annähernd die Charakteristik eines Lambertschen Strahlers aufweist und daß die aus Mikroprismen bestehende Prismenstruktur derart ausgebildet ist, daß die Lichtausstrahlung der Innenraumleuchte einen insbesondere für Bildschirmarbeitsplätze vorgegebenen Ausblendwinkel nicht übersteigt.

Die Erfindung kann vorsehen, daß der Hauptreflektor im Querschnitt konzentrisch zur Lichtquelle angeordnet ist, seine der Lichtquelle zugekehrte Innenfläche diffus reflektierend ausgebildet ist und mit mindestens einer Seitenkante an einer der Lichtquelle zugewandten Stirnseite des Lichtleiters anliegt, Die Erfindung kann weiterhin vorsehen, daß der Hauptreflektor mindestens in Teilbereichen seiner Oberfläche lichtdurchlässig ausgebildet ist.

Dabei kann vorgesehen sein, daß die lichtdurchlässige Oberfläche des Hauptreflektors transparent ausgebildet ist.

Es kann auch vorgesehen sein, daß die lichtdurchlässige Oberfläche des Hauptreflektors in Form eines Lochbleches ausgebildet ist.

Die Erfindung kann vorsehen, daß der Lichtleiter, senkrecht zu der Haupttransportrichtung des sich in ihm ausbreitenden Lichtes betrachtet, eine konstante Dicke aufweist und mindestens auf der der Lichtquelle abgewandten Stirnseite einen weiteren Reflektor trägt.

Dabei kann vorgesehen sein, daß der weitere Reflektor als eine auf die zugeordnete Stirnfläche des Lichtleiters direkt aufgebrachte, in Richtung aus diese diffus reflektirende Schicht ausgebildet ist.

Es kann auch vorgesehen sein, daß der weitere Reflektor der dem Hauptreflektor gegenüberliegenden Stirnfläche des Lichtleiters zugeordnet, und dem Hauptreflektor spiegelbildlich entsprechend ausgebildet ist und in ihm eine weitere Lichtquelle angeordnet ist.

Die Erfindung kann weiterhin vorsehen, daß der Lichtleiter als planparallele oder flächenparallel gewölbte Lichtleiterplatte ausgebildet ist.

Die Erfindung kann vorsehen, daß der Lichtleiter, in einer zu der Haupttransportrichtung des sich in ihm ausbreitenden Lichtes parallelen Ebene sich in dieser Haupttransportrichtung keilförmig verjüngendes Querschnittsprofil aufweist.

Gemäß einer Ausführungsform kann vorgesehen sein, daß die Lichtquelle als eine langgestreckte Lampe ausgebildet ist, zu deren beiden Seiten je ein Lichtleiter angeordnet ist und der Hauptreflektor als ein die Lichtquelle konzentrisch umschließender Zylinder mit seitlichen Längsschlitzen ausgebildet ist, in die jeweils die der Lichtquelle zugewandte Stirnfläche je einer der Lichtleiter plan abschließend eingesetzt ist.

Es kann vorgesehen sein, daß in der Leuchtenmittelebene, einander parallel liegend, nebeneinander zwei Lichtquellen angeordnet sind, wobei jeder dieser Lichquellen ein eigener Hauptreflektor zugeordnet ist, an den jeweils ein Lichtleiter stirnseitig angesetzt ist.

Die Erfindung kann vorsehen, daß der mindestens eine Lichtleiter in Bezug auf eine die Längsachse der Lichtquelle enthaltende Horizontalebene um einen vorgegebenen Winkel in vertikaler Richtung angestellt bzw. anstellbar ist.

Die Erfindung kann vorsehen, daß der mindestens eine Lichtleiter in Teilbereiche unterteilt ist, die in Richtung der Längsachse der Lichtquelle aneinandergrenzen und individuell anstellbar sind.

Die Erfindung kann vorsehen, daß die das in dem mindestens einen Lichtleiter transportierte Licht auskoppelnde Prismenstruktur in aneinandergrenzende Teilbereiche mit unterschiedlicher Lichtabstrahlcharakteristik gegliedert ist.

Eine erfindungsgemäße Innenraumleuchte kann als Pendel- oder Deckenleuchte für Arbeitsplatzbeleuchtung, insbesondere mit einer Orientierung in einem Raum derart, daß deren Lampenlängsachse im wesentlichen senkrecht zu einer Fensterfront dieses Raumes steht, verwendet werden.

Die Erfindung kann vorsehen, daß die Lichtquelle als ringförmige Lampe ausgebildet ist und der Lichtleiter, von der Lampe umschlossen, mit ihrem Querschnitt fluchtend angeordnet ist.

Dabei kann vorgesehen sein, daß der der ringförmigen Lampe konzentrisch zugeordnete Hauptreflektor als ein im Querschnitt halbschalenförmig ausgebildeter Gegenreflektor unterhalb der Lampe angeordnet ist und daß ferner ein Dachreflektor vorgesehen ist, der bei kegelschnittähnlichem Querschnittsprofil die Lampe von oben her teilweise derart umfaßt, daß sein Außenrand von dem des Gegenreflektors einen vorgegebenen Abstand aufweist.

Bei einer erfindungsgemäßen Innenraumleuchte kann der Lichtleiter als Arm einer Tischleuchte ausgebildet sein, dem fußseitig die Lichtquelle mit dem diese konzentrisch umgebenden Hauptreflektor zugeordnet ist und der auf der Unterseite seines kopfseitigen Endes die lichtauskoppelnde Prismenstruktur trägt.

Diese Lösung geht zunächst von der Erkenntnis aus, daß sich das aus US-A-5 555 109 und US-A- 5 396 350 bekannte Konzept für ein optisches Beleuchtungssystem, obwohl zunächst insbesondere zum Beleuchten unterschiedlicher Anzeigeeinheiten entwickelt, unter bestimmten Voraussetzungen auch bei einer Innenraumleuchte einsetzen ließe. Voraussetzung wäre allerdings, daß sich die daraus bekannte Lichtauskopplung auch bei für die Innenraumbeleuchtung erforderlichen großen Flächen einsetzen und sich bei einem für die Raumbeleuchtung ausreichenden Wirkungsgrad der Leuchte zugleich eine Lichtlenkung erreichen ließe, die der einer konventionellen, blendungsfreien Innenraumleuchte entspricht.

Im Gegensatz zu einer Anzeigeeinheit kommt es bei einer Innenraumleuchte darauf an, die das Licht abstrahlende Fläche, hier die Lichtaustrittsfläche der Leuchte, nicht nur mit gutem Wirkungsgrad möglichst gleichmäßig auszuleuchten, sondern darüber hinaus auch die Lichtabstrahlung so zu lenken, daß die für eine derartige Beleuchtung festgelegten Abblendbedingungen, hinsichtlich der Längs- und Querentblendung der Leuchte, vor allem aber auch im Hinblick auf eine mögliche Reflexblendung eingehalten werden.

Wie Untersuchungen gezeigt haben beziehungsweise die erfindungsgemäße Lösung lehrt, sind diese Anforderungen unter Anpassung der bekannten Lösung an die spezifischen Randbedingungen für eine Innenraumleuchte lichttechnisch unter bestimmten Voraussetzungen erfüllbar. Erzielt wird damit eine im Vergleich zu einleitend diskutierten, lichttechnisch vergleichbaren bekannten Lösungen extrem flache, dabei funktionale Leuchte, die insbesondere auch die geometrischen Abmessungen moderner Lampentypen vorteilhaft nutzt. Bei der erfindungsgemäßen Lösung wird der von der Lichtquelle erzeugte Lichtstrom mit hohem Wirkungsgrad in die Lichtleiterplatte(n) eingekoppelt und unter für die Innenraumbeleuchtung festgelegten Abstrahlungsbedingungen blendfrei wieder ausgekoppelt. Dabei kommt es weniger auf die absolute Dimension der einzelnen Elemente ("Erhebungen") der das Licht auskoppelnden Prismenstruktur an, als auf deren Gestaltung und Lage der Reflexionsflächen, um die gewünschte Lichtverteilung zu erzielen, Längs- und Querentblendung der Innenraumleuchte zu erreichen und darüberhinaus eine Reflexblendung, hervorgerufen durch Reflexionen an von der Innenraumleuchte beleuchteten Flächen, zu vermeiden.

Wie in Unteransprüchen beschriebene Weiterbildungen der Erfindung zeigen, ist eine Mehrzahl von Möglichkeiten denkbar, dieses Gestaltungsprinzip weiter zu entwickeln und an unterschiedliche Beleuchtungsaufgaben anzupassen.

Ausführungsbeispiele der Erfindung werden im folgenden anhand der Zeichnungen näher beschrieben.

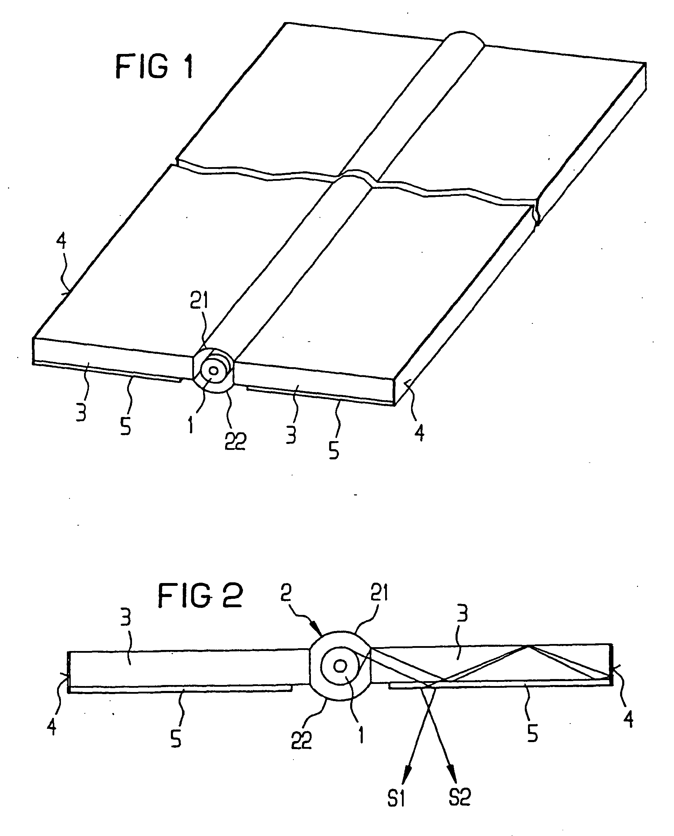

Die mit Bezug auf Fig. 1 bis 11 beschriebenen Leuchten bilden dabei keine Ausführungsformen einer patentgemäßen Leuchte. Sie illustrieren jedoch Merkmale, die bei einer patentgemäßen Leuchte gegeben sein können, und sollen das Verständnis der Erfindung und ihrer verschiedenen Ausführungsformen erleichtern. Es zeigen:
Figur 1 in dreidimensionaler Darstellung ein Beispiel für eine Innenraumleuchte mit einer langgestreckten Lichtquelle, einem diese umgebenden Hauptreflektor sowie seitlich und quer zur Lampenlängsachse ah den Reflektor angesetzten Lichtleiterplatten mit einem Lichtaustritt auf der Unterseite,
Figur 2 einen Querschnitt zu der in Figur 1 dargestellten Innenraumleuchte mit die Lenkung des von der Lichtquelle abgestrahlten Lichtes schematisch andeutenden Teilstrahlen,
Figur 3 und 4 je ein Diagramm für eine Lichtverteilungskurve für das von der Lichtquelle sowie dem diese umgebenden Hauptreflektor abgegebene Licht bzw. Lichtverteilungskurven für das von der Innenraumleuchte insgesamt abgestrahlte Licht sowie in der C0-180°-Ebene als auch in der C90-270°-Ebene,
Figur 5 bis 11 schematisch je eine weitere Ausführungsform einer Innenraumleuchte mit langgestreckter Lichtquelle,
Figur 12 einen Halbschnitt durch eine erfindungsgemäße Rundleuchte und
Figur 13 schematisch eine dreidimensionale Darstellung einer Tischleuchte.

In Figur 1 und Figur 2 ist in einer schematischen Darstellung jeweils eine dreidimensionale Ansicht bzw. ein Querschnitt für eine Innenraumleuchte gezeigt, deren charakteristisches äußeres Merkmal in einer ausgeprägt flächenhaften Gestaltung liegt. Als Lichtquelle dieser Innenraumleuchte wird in diesem Beispiel eine mit ihrer Längsachse in der Mittelebene der Leuchte liegende langgestreckte Lampe 1 verwendet, der konzentrisch zu ihrer Achse ein sie umgebender Hauptreflektor 2 zugeordnet ist. Dieser Hauptreflektor 2 besteht aus zwei Halbschalen 21 und 22, die im Querschnitt kreisabschnittförmig ausgebildet und - bezogen auf die Leuchte - oberhalb bzw. unterhalb der Lampe 1 angeordnet sind. Die beiden Halbschalen 21, 22 des Hauptreflektors 2 sind auf ihrer der Lampe 1 zugekehrten Innenseite vollkommen diffus reflektierend ausgebildet. An die auf Abstand zueinander stehenden Seitenränder der Halbschalen 21, 22 des Hauptreflektors 2 ist zu beiden Seiten der Lampe 1 senkrecht und quer jeweils mit einer Stirnseite eine Lichtleiterplatte 3 angesetzt. Die Lichtleiterplatten 3 weisen zueinander exakt parallele und plane Oberseiten bzw. Unterseiten auf, bestehen aus einem möglichst transparenten Material, beispielsweise Glas oder einem Kunststoff. Als Kunststoffmaterial bietet sich beispielsweise ungefärbtes Polymethylmethacrylat (PMMA) an, weil dieses in der Beleuchtungstechnik bereits vielfach verwendet wird. Selbstverständlich können aber auch andere Materialien eingesetzt werden, sofern sie die geforderten Lichtleiteigenschaften besitzen.

Die von der Lampe 1 abgewandten Stirnseiten der Lichtleiterplatten 3 sind mit einem planen Reflektorstreifen 4 abgedeckt, dessen unmittelbar an die Stirnseite der jeweiligen Lichtleiterplatte 3 angesetzte Innenfläche ebenfalls möglichst vollkommen diffus reflektierend ausgebildet ist. Ein dafür geeignetes Material ist ein aus weißgefärbtem Teflon bestehendes Klebeband. Die Reflektorstreifen 4 sind vor allem auf der der Lichteintrittsseite gegenüberliegenden Stirnseite der Lichtleiterplatten 3 funktionsbedeutend. Vorteilhaft ist es aber auch, die übrigen Stirnseiten der Lichtleiterplatten abzudecken.

Auf die Unterseiten der Lichtleiterplatten 3 ist unmittelbar eine Kunststoff-Folie als lichtauskoppelndes Element aufgebracht, die sich von den Außenkanten der Lichtleiterplatten 3 bis nahe an den Hauptreflektor 2 erstreckt. Diese Kunststoff-Folie besitzt eine Mikroprismenstruktur und wird deshalb im folgenden als Prismatik 5 bezeichnet. Materialien dieser Art werden unter dem Warenzeichen "Spectra Vue" von der Firma AlliedSignal Inc. auf dem Markt insbesondere für die Hintergrundbeleuchtung von Flüssigkeitskristallanzeigen angeboten. Hier ist für die Innenraumbeleuchtung eine Prismenstruktur einzusetzen, bei der die Neigungswinkel der Mikroprismen an die gewünschte Lichtverteilungskurve angepaßt sind.

Wie die Darstellungen von Figur 1 und 2 erkennen lassen, besitzt die beschriebene Innenraumleuchte eine ausgesprochen flache Bauform, die insbesondere auch durch die Verwendung von heute verfügbaren Leuchtstofflampen mit 16 mm Durchmesser (uneinheitlich als T5- bzw. T16-Lampen bezeichnet) ermöglicht wird, wie noch zu erläutern ist. Der Lampendurchmesser bestimmt auch in etwa die Dicke der Lichtleiterplatten 3, deren Verhältnis von Dicke zu Breite - in Querschnittsrichtung gesehen - z.B. 1:10 beträgt. Wesentlich für die Funktion der in Figur 1 und Figur 2 dargestellten Innenraumleuchte ist zunächst die lichterzeugende Einheit, bestehend aus der Lampe 1 und dem diese konzentrisch umgebenden Hauptreflektor 2. Da die der Lampe 1 zugekehrte Innenflächen der beiden Halbschalen 21 und 22 voraussetzungsgemäß möglichst ideal diffus reflektierend ausgebildet sind und zu diesem Zweck beispielsweise ebenso wie die Reflektorstreifen 4 mit weißgefärbtem Teflon beschichtet sind, bilden die Lampe 1 und der Hauptreflektor 2 eine lichttechnische Einheit, die näherungsweise einem Lambert-Strahler entspricht.

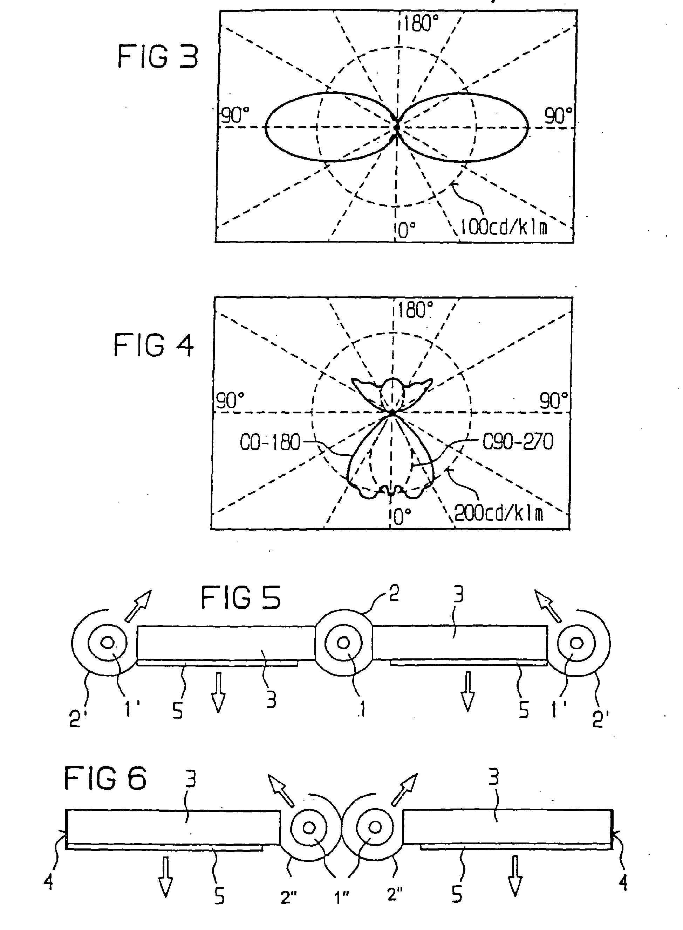

In Figur 3 ist dieser Sachverhalt zur Verdeutlichung in Form eines Polardiagrammes dargestellt. Dieses Diagramm zeigt die Lichtstärkeverteilungskurve dieser lichttechnischen Einheit, bestehend aus Lampe 1 und Hauptreflektor 2 in der sog. C0-180°-Ebene, d.h. hier in der zur Längsachse der Lampe 1 senkrechten Querebene. Beim idealen Lambert-Strahler ergäbe sich ein exakter Kreis als Lichtstärkeverteilungskurve. In diesem Fall ist dieser Kreis näherungsweise ellipsenartig verformt. Dies ist auch darauf zurückzuführen, daß die ideale Kreisform des Hauptreflektors durch die der Lampe 1 zugewandten Stirnseiten der Lichtleiterplatten 3 "gestört" ist. Dennoch verdeutlicht diese in Figur 3 dargestellte Lichtverteilungskurve, daß Licht in die zu beiden Seiten der Lampe 1 angeordneten Lichtleiterplatten 3 nicht etwa gerichtet, sondern möglichst diffus eingestrahlt wird.

Zurückkehrend zur Darstellung von Figur 2 folgt daraus ein Strahlengang des in die Lichtleiterplatten 3 eingekoppelten Lichtes, der beispielhaft durch zwei typische Teilstrahlen S1 bzw. S2 angedeutet ist. Der erste Teilstrahl S1 wird nach dem lichtbrechenden Durchgang durch die der Lampe 1 zugekehrte Stirnfläche der Lichtleiterplatte 3 an deren Ober- bzw. Unterseite mehrfach total reflektiert. Er erreicht so die der Lampe 1 entfernt liegende äußere Stirnfläche der Lichtleiterplatte 3, wo er ungerichtet am entsprechenden Reflektorstreifen 4 wieder in die Lichtleiterplatte 3 zurückreflektiert wird. Dabei tritt schließlich der Fall ein, daß er auf die Unterseite der Lichtleiterplatte 3 auftreffend den Grenzwinkel für die Totalreflexion überschreitet und durch die Prismatik 5 hindurchtretend auf der Unterseite der Innenraumleuchte austritt.

Der zweite Teilstrahl S2 illustriert, daß aufgrund der diffusen Abstrahlcharakteristik der aus Lampe 1 und Hauptreflektor 2 bestehenden lichtabstrahlenden Einheit ein bestimmter Teillichtstrom bereits aus der Unterseite der Lichtleiterplatte 3 austreten kann, ohne daß die Lichtstrahlen dieses Teillichtstromes zuvor Totalreflexionen in der Lichtleiterplatte 3 erfahren. Nicht im einzelnen gezeigt ist in Figur 2, wie die einzelnen Strahlen des aus der Lichtleiterplatte 3 austretenden Lichtes, hier beispielsweise die Teilstrahlen S1 bzw. S2, durch die Prismatik 5 umgelenkt werden. Dies erscheint hier nicht erforderlich, da ausführliche Einzeldarstellungen für den prinzipiellen Aufbau und die Funktion dieser Prismatik 5 in den einleitend bereits diskutierten Dokumenten US-A-55 55 109 sowie US-A-53 96 350 ausführlich erläutert sind und deshalb als bekannt angesehen werden können. Hinzuweisen ist jedenfalls darauf, daß die hier vorliegende Ausführungsform der Prismatik 5 insbesondere im Hinblick auf die Neigungswinkel der Mikroprismen so angepaßt ist, daß sie blendungsbegrenzend wirkt.

In Figur 4, einem der Darstellung von Figur 3 entsprechenden Diagramm, sind für die Erläuterung dieser Blendungsbegrenzung die nun die Innenraumleuchte als Einheit betreffenden Lichtverteilungskurven für die beiden zueinander senkrecht stehenden C0-180°- bzw. C90-270°-Ebenen dargestellt. Aus dem Vergleich der beiden Diagramme von Figur 3 und Figur 4 wird die lichtlenkende Funktion der Lichtleiterplatten 3 in Verbindung mit den entsprechenden Prismatiken 5 deutlich. Die entsprechenden Lichtverteilungskurven sind in durchgezogenen bzw. unterbrochenen Linien dargestellt. Die beiden Kurvenäste der Lichtverteilungskurven für den unteren Halbraum demonstrieren die gut gebündelte Abstrahlcharakteristik der Innenraumleuchte mit einer eindeutigen Querentblendung, insbesondere aber auch einer hervorragenden Längsentblendung der Leuchte. Viele konventionellen Innenraumleuchten erfüllen diese beiden, insbesondere für die Beleuchtung von Arbeitsplätzen wesentlichen Bedingungen nicht in beiden Richtungen gleichermaßen. Die hier erzielten Abstrahlcharakteristiken erlauben es sogar, diese Innenraumleuchte mit der Zweckbestimmung einer Arbeitsplatzleuchte in einem Innenraum senkrecht zur Fensterfront anzuordnen. Dazu kommt ein überraschend günstiger Leuchtenbetriebswirkungsgrad, so daß diese genannten Vorteile nicht etwa durch hohe Lichtstromverluste kompensiert würden.

Figur 4 zeigt aber auch eine andere Besonderheit der Innenraumleuchte, die bisher noch nicht erwähnt wurde. Bei der beschriebenen Grundform der Innenraumleuchte dürfte an sich kein nennenswerter Lichtstromanteil in den oberen Halbraum austreten. Wenn dies, den in Figur 4 dargestellten Lichtverteilungskurven entsprechend, dennoch der Fall ist, so ist dies auf eine bisher noch nicht erwähnte Weiterbildung der beschriebenen Innenraumleuchte zurückzuführen. Es ist nämlich möglich, den Hauptreflektor 2 der Innenraumleuchte, ohne seine prinzipielle Funktion als diffuser Reflektor zu beschränken, auch teillichtdurchlässig auszubilden. Den in Figur 4 dargestellten Lichtverteilungskurven liegt eine Innenraumleuchte zugrunde, bei der die obere Halbschale 21 des Hauptreflektors 2 teillichtdurchlässig, hier in Form einer Opalschale, ausgebildet ist. Eine andere Möglichkeit mit ähnlicher lichttechnischer Wirkung besteht darin, diese obere Halbschale 21 des Hauptreflektors 2 aus einem Siebblech herzustellen. Analoges gilt im Prinzip auch sogar für die untere Halbschale 22, falls dies wegen des optischen Effektes erwünscht wäre, ohne dadurch die beschriebene Funktion der Grundform wesentlich zu beeinträchtigen bzw. zu verlassen.

Wie sich die anhand der Figuren 1 bis 4 beschrieben Grundform einer direktstrahlenden Leuchte außerdem weiterbilden ließe, ist beispielhaft in Figur 5 bzw. 6 im Hinblick auf die Anordnung der Lichtquelle(n) dargestellt. In den Beispielen nach Figur 5 ist die vorstehend beschriebene Grundform der Innenraumleuchte durch weitere lichteinkoppelnde Einheiten erweitert. In diesem Falle sind anstatt der Reflektorstreifen 4 an den entsprechenden Stirnflächen der Lichtleiterplatten 3 jeweils eine weitere Lampe 1' und ein weiterer dazu konzentrischer Reflektor 2' vorgesehen. In bezug auf die Lichteinkopplung wirken diese zusätzlichen Einheiten - nur in Gegenrichtung den Anteil der von der Lampe 1 und dem Hauptreflektor 2 in die Lichtleiterplatten 3 eingekoppelten Lichtstromanteil überlagernd - ansonsten völlig analog und wie vorstehend beschrieben.

Zusätzlich besteht die Möglichkeit, die weiteren Reflektoren 2' so auszubilden, daß sie die Lampen 1' nicht vollständig bis hin zu den Rändern der angrenzenden Stirnflächen der Lichtleiterplatten 3 umschließen. Wie mit Pfeilen schematisch angedeutet, kann ein von den weiteren Lampen 1' abgestrahlter Teillichtstrom dann auch in den oberen Halbraum, gegen die Decke gerichtet, aus dem so gebildeten Spalt austreten. Dabei ist vorausgesetzt, daß die Innenraumleuchte von einer Raumdecke pendelnd abgehängt ist. Auch in dieser Ausführungsform bildet die Innenraumleuchte eine Direkt/Indirekt-Leuchte.

In Figur 6 ist eine weitere Möglichkeit einer Ausführungsform für die Innenraumleuchte dargestellt, die einen in bezug auf die Leuchtenmittelebene spiegelbildlich symmetrisch ausgebildeten Leuchtenaufbau mit jeweils einer Lampe 1'' und einem zugeordneten Hauptreflektor 2' ' als eine von zwei lichteinkoppelnden Einheiten zeigt, denen jeweils nur einseitig dazu eine einzige Lichtleiterplatte 3 zugeordnet ist. Bei dieser Ausführungsform erfolgt somit die Lichteinkopplung nur in einer Richtung, grundsätzlich gleicht aber das Funktionsprinzip auch dieser Ausführungsform dem der anhand der Figuren 1 bis 4 beschriebenen Grundform der Innenraumleuchte. Wiederholungen zur lichttechnischen Funktion dieser Ausführungsform erübrigen sich daher.

Zusätzlich ist es auch bei diesem Ausführungsbeispiel wieder möglich, die beiden weiteren Hauptreflektoren 2'' die jeweils zugeordnete Lampe 1'' nicht ganz umschließend auszubilden, sondern auf der Oberseite einen Spalt offen zu lassen, durch den ein indirekter Lichtstromanteil gegen die Raumdecke gerichtet austreten kann. Dieses Beispiel zeigt auch, daß es zweckmäßig ist, einen solchen Spalt nahe der Stirnkante der zugeordneten Lichtleiterplatte 3 anzuordnen, um die Funktion des Hauptreflektors als angenäherter Lambert-Strahler im wesentlichen zu gewährleisten. Auch in diesem Falle wirkt die Innenraumleuchte als Direkt/Indirekt-Leuchte, wie schematisch durch Pfeile für die nach oben bzw. nach unten gerichteten Lichtstromanteile angegeben ist.

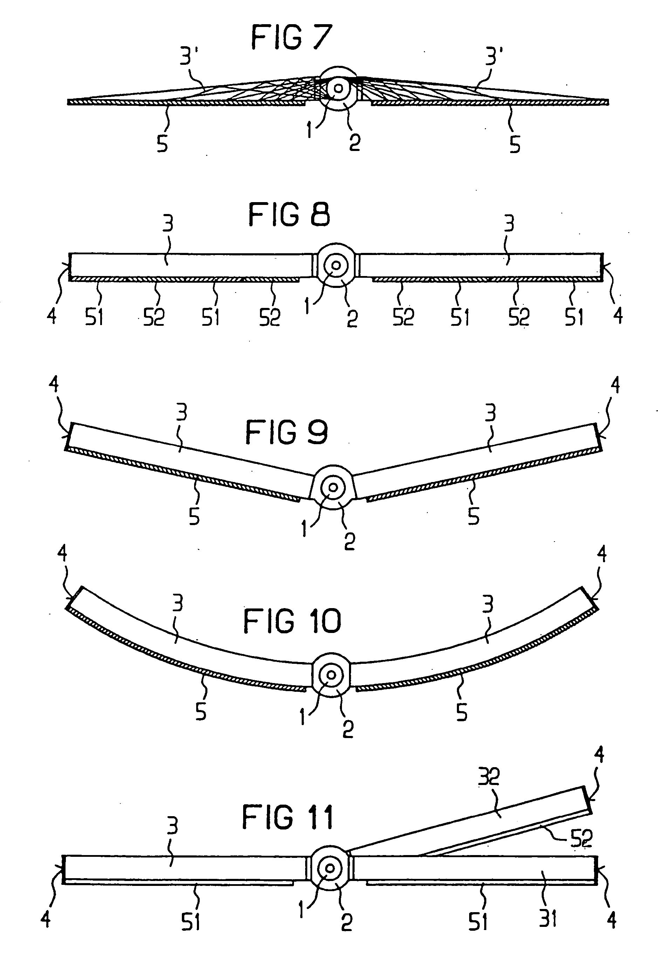

Figur 7 bis 11 zeigen dagegen weitere Ausführungsformen für Innenraumleuchten mit je einer in bezug auf zwei Lichtleiterplatten 3 zentral angeordneten langgestreckten Lichtquelle 1 entsprechend der in den Figuren 1 und 2 dargestellten Grundform. Aufbau und Anordnung der lichtabgebenden Einheit, gebildet aus der Lichtquelle 1 und dem Hauptreflektor 2 mit zwei Halbschalen 21 bzw. 22, ist analog zu dem Ausführungsbeispiel der Figuren 1 und 2 gewählt, so daß für die nachfolgenden Ausführungsbeispiele auch die entsprechenden, bereits beschriebenen Einzelheiten gelten und es hier insoweit keiner Wiederholung bedarf.

In dem in Figur 7 schematisch dargestellten Querschnitt einer weiteren Ausführungsform einer Innenraumleuchte sind die zu beiden Seiten der Lichtquelle 1 und des Hauptreflektors 2 mit seinen Halbschalen 21 bzw. 22 angeordneten Lichtleiterplatten 3' keilförmig gestaltet. Entsprechend dem Neigungswinkel zwischen der Boden- und der Deckfläche der Lichtleiterplatten 3' läßt sich damit, wie in Figur 7 schematisch durch eine Verteilung von Lichtstrahlen angedeutet, die Lichtlenkung in Ausbreitungsrichtung in den Lichtleiterplatten 3' beeinflussen. Im Gegensatz zu dem Ausführungsbeispiel gemäß Figur 1 und 2 treten hier keine entgegen der ursprünglichen Ausbreitungsrichtung zurückreflektierten Teilstrahlen auf. Abgesehen von der noch flacheren, in der Ausgestaltung rein funktional wirkenden Leuchtenbauform bestehen damit hier Möglichkeiten, den Betriebswirkungsgrad der Leuchte weiter zu verbessern.

In Figur 8 ist eine weitere Ausführungsform für eine Innenraumleuchte dargestellt, die auf den ersten Blick der Ausführungsform gemäß Figur 1 bzw. 2 entspricht. Im Unterschied zu der anhand der Figuren 1 und 2 erläuterten Grundform ist hier aber die lichtauskoppelnde Prismatik 5 in einzelne Prismatikbereiche 51 bzw. 52 unterteilt. Diese Prismatikbereiche 51 bzw. 52 sind hinsichtlich ihrer lichtauskoppelnden Oberflächen derart gestaltet, daß sie Licht mit jeweils unterschiedlicher Lichtverteilung ausstrahlen. So sind beispielsweise die einen Prismatikbereiche 51 derart ausgebildet, daß sie eine vorzugsweise tiefstrahlende Lichtausstrahlungscharakteristik besitzen, während andererseits die zweiten Prismatikbereiche 52 eine überwiegend breitstrahlende Lichtausstrahlungscharakteristik aufweisen. Mit dieser Anordnung von Prismatikbereichen 51 bzw. 52 mit jeweils unterschiedlicher Lichtverteilungskurve lassen sich sowohl zonale als auch großflächige Beleuchtungslösungen realisieren und somit unterschiedliche Lichtstimmungen erzeugen.

Figur 9 zeigt ein weiteres Ausführungsbeispiel für eine Innenraumleuchte. Im Unterschied zu den bisher beschriebenen Ausführungsformen von Innenraumleuchten sind hier diese beiden Lichtleiterplatten 3 um einen vorgegebenen Winkel in der Vertikalen angestellt. Wenn die Lichtleiterplatten 3 in bezug auf die Leuchtenlängsachse scharnierartig drehbar angeordnet sind, ist dieser Anstellwinkel nicht fest, sondern sogar einstellbar. Da die lichtauskoppelnde Prismatik 5 eine vorgegebene Lichtverteilungskurve mit definierter Hauptausstrahlungsrichtung besitzt, wird diese Hauptausstrahlungsrichtung bei einem Anstellen der Lichtleiterplatten 3 um einen vorgegebenen Winkel ebenfalls um diesen Anstellwinkel aus der Vertikalen nach außen geschwenkt. Bei einer beispielsweise vorwiegend tiefstrahlenden Lichtausstrahlungscharakteristik der Prismatiken 5 läßt sich so mit wachsendem Anstellwinkel der Lichtleiterplatten 3 eine Lichtausstrahlung der gesamten Innenraumleuchte erzielen, die mit wachsendem Anstellwinkel immer mehr breitstrahlend wird.

In Figur 10 ist ebenfalls im Querschnitt eine Ausführungsform der Innenraumleuchte gezeigt, bei der die Lichtleiterplatten 3 - im Gegensatz zu allen vorbeschriebenen Ausführungsformen - von der Leuchtenmittelachse nach außen gewölbt ausgebildet sind. Da die Lichtleiterplatten 3 aus einem Kunststoffmaterial gebildet sind, ist ein derartig gewölbtes Querschnittsprofil der Lichtleiterplatten 3 mit einfachen Mitteln zu realisieren. Weiterhin bestehen die Prismatiken 5 voraussetzungsgemäß aus einer dünnen Kunststoff-Folie mit ausreichender Elastizität, so daß sich diese ohne weiteres mechanisch, an der Unterseite der Lichtleiterplatten 3 unmittelbar festlegen lassen, ohne dabei Wirkungsgradverluste der Innenraumleuchte in Kauf nehmen zu müssen. Lichttechnisch betrachtet, ist diese in Figur 10 dargestellte Ausführungsform einer Innenraumleuchte mit schwingenartig gewölbten Lichtleiterplatten 3 eine Alternative zu der Ausführungsform von Figur 9.

In Figur 11 ist eine Ausführungsform der Innenraumleuchte dargestellt, bei der die planen Lichtleiterplatten 3, in Längsrichtung der Leuchte gesehen, in Teilbereiche gegliedert sind, so daß beispielsweise ein zwischen zwei stirnseitigen Endbereichen 31 der Lichtleiterplatten 3 zentral angeordneter Mittelbereich 32 individuell gegenüber diesen Stirnbereichen 31 um einen vorgegebenen Winkel anstellbar ist. Geht man davon aus, daß die stirnseitige angeordneten, horizontal ausgerichteten Teilbereiche 31 der Lichtleiterplatten 3 lichtauskoppelnde Prismatiken 5 mit lichtverteilenden Eigenschaften tragen, wie sie vorstehend für das anhand der Figuren 1 und 2 beschriebenen Ausführungsbeispiele erläutert wurden, so bildet auch die in Figur 11 dargestellte Ausführungsform zunächst eine Innenraumleuchte mit Längs- und Querentblendung.

Diese Leuchte läßt sich zu einem Leuchtensystem ausgestalten, falls man nun für die ausstellbaren Mittelbereiche 32 der Leiterplatten 3 eine Prismatik 51 wählt, deren Lichtausstrahlungscharakteristik nicht blendungsbegrenzt breitstrahlend, sondern vorwiegend tiefstrahlend ist. In diesem Falle wirkt der auszustellende Mittelbereich 31 der Ausführungsform nach Figur 11 ähnlich wie ein herkömmlicher Strahler mit einer stark gebündelten Lichtverteilung, der unmittelbar in eine blendungsbegrenzte Innenraumleuchte integriert ist. Mit der in Figur 11 dargestellten Ausführungsform läßt sich so neben einer allgemeinen Beleuchtung ein lokal begrenzter Lichtakzent setzen.

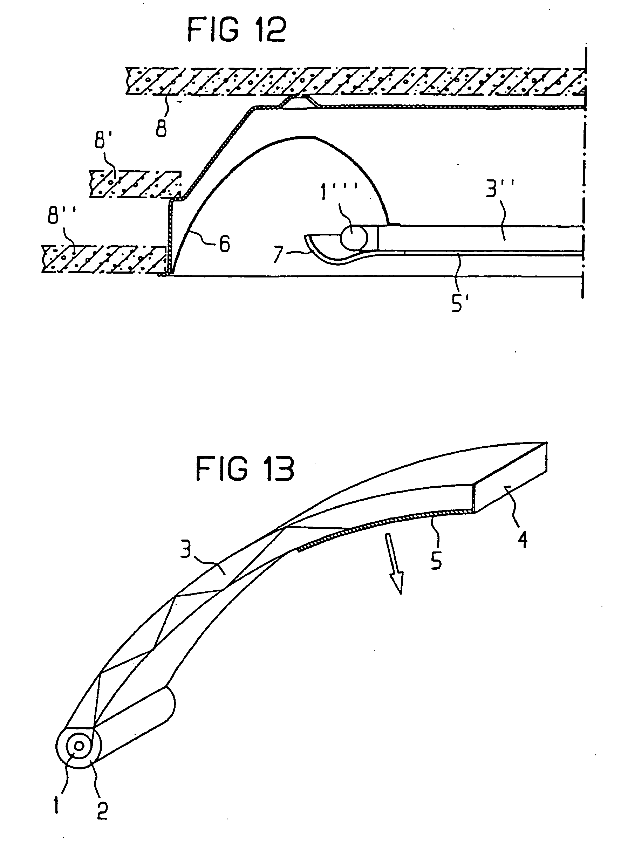

Bei allen vorstehend anhand der Figuren 1 bis 11 beschriebenen Ausführungsformen wurde als Lichtquelle 1 eine langgestreckte Lampe, vorzugsweise eine Leuchtstofflampe, mit möglichst geringem Durchmesser zugrundegelegt. Die beiden in Figur 12 bzw. 13 dargestellten Ausführungsformen unterscheiden sich darin, im übrigen wird das beschriebene Leuchtenkonzept auch hier eingesetzt.

In Figur 12 ist in einem Halbschnitt eine Rundleuchte dargestellt, deren Lichtquelle 1' ' ' als ringförmige Lampe ausgebildet ist. Diese Lichtquelle 1' ' ' umschließt eine zu ihr fluchtend angeordnete, als Kreisscheibe ausgebildete Lichtleiterplatte 3' ', die auf ihrer Unterseite wiederum eine in diesem Fall ebenfalls scheibenförmig ausgebildete Prismatik 5' trägt. Funktional gleichwertig zu den in den vorstehenden Ausführungsformen dargelegten Eigenschaften transportiert die Lichtleiterplatte 3' ' das über ihre Umfangsfläche von der benachbarten Lichtquelle 1' eingekoppelte Licht in radialer Richtung und strahlt es nach unten gerichtet über die Prismatik 5' ab. Vorzugsweise ist dabei die Abstrahlcharakteristik dieser Prismatik 5' vorwiegend tiefstrahlend, so daß der so auf eine unter der Leuchte liegende beleuchtete Fläche abgegebene Lichtstromanteil zonal fokussiert ist.

Um eine allgemeine Beleuchtung zu realisieren, weist nun die in Figur 12 dargestellte Rundleuchte, konzentrisch zur Lichtquelle 1' ' ' angeordnet, einen Dachreflektor 6 auf, dessen Querschnittsprofil beispielsweise in Form einer angenäherten Evolvente zur Lichtquelle 1' ausgebildet ist. Insbesondere um eine Blendungsbegrenzung zu erreichen, aber auch um die Lichteinkopplung in die Lichtleiterplatte 3' ' zu verbessern, ist ein Gegenreflektor 7 vorgesehen. Dieser ist im Querschnitt in Form einer Halbschale ausgebildet und die Lichtquelle 1''' von unten gegen die Lichtaustrittsöffnung abdekkend angeordnet. Bei dieser Anordnung des Gegenreflektors 7 kann kein von der Lichtquelle 1' ' ' abgegebenes Licht direkt aus der Rundleuchte austreten, vielmehr wird dieses Licht in zwei Lichtstromanteile aufgespalten, die einerseits über den Dachreflektor 6 mit relativ breiter Streuung bzw. über die Lichtleiterplatte 3' ' in Verbindung mit der Prismatik 5' vorzugsweise relativ eng gebündelt indirekt abgegeben werden.

In Figur 12 ist schließlich schematisch angedeutet, daß die Rundleuchte sowohl als reine Anbauleuchte an eine Raumdecke 8 unmittelbar angesetzt sein kann. Weitere Möglichkeiten bestehen darin, die Rundleuchte in einen Ausschnitt der Raumdecke 8' oder 8' ' teilweise bzw. vollständig einzubauen.

In Figur 13 ist schließlich schematisch illustriert, daß das zugrundeliegende Konzept auch in Form einer Tischleuchte realisiert werden kann. In diesem Fall ist die Lichtquelle 1, umgeben von dem Hauptreflektor 2, im Fußteil der Leuchte angeordnet, wie schematisch dargestellt ist. Vorzugsweise wird dabei als Lichtquelle eine Lampe mit relativ kurzem Brenner eingesetzt. Wie bei den anderen Ausführungsbeispielen wird das von der Lichtquelle 1 abgestrahlte Licht über die mit einer ihren Stirnseiten an den Hauptreflektor 2 angesetzte Lichtleiterplatte 3 in Richtung des Kopfes der Tischleuchte transportiert. Beispielhaft ist in Figur 13 dargestellt, daß die Lichtleiterplatte 3 dabei in Form eines gewölbten Rechteckstabes ausgebildet ist. Natürlich sind neben dieser Ausgestaltung auch andere Ausführungsformen denkbar. Die kopfseitige Stirnfläche der Lichtleiterplatte 3 ist wieder durch einen Reflektor 4 in Form einer dünnen Folie abgedeckt, dessen der Lichtleiterplatte 3 zugekehrte Innenseite reflektierend ausgebildet ist. Im Kopfteil der Tischleuchte von Figur 13 ist schließlich auf der Unterseite der Lichtleiterplatte 3 die lichtauskoppelnde Prismatik 5 angeordnet. Auch bei dieser Anordnung gleicht die lichttechnische Funktion in ihrem Prinzip den bereits vorstehend beschriebenen Ausführungsformen, so daß sich hier eine weitere Detailbetrachtung dazu erübrigt.

Die anhand der Zeichnung beschriebenen Ausführungsbeispiele für Innenraumleuchten demonstrieren zunächst, daß die erfindungsgemäße Lösung, auch in Verbindung mit unterschiedlichen Lampentypen, eine Vielzahl von Realisierungsmöglichkeiten bietet, um Innenraumleuchten zu gestalten, ohne dabei die Lichttechnik zu vernachlässigen. Im Gegenteil belegen insbesondere auch die Ausführungsformen, bei denen eine langgestreckte Leuchtstofflampe als Lichtquelle eingesetzt wird, daß sich auch für diesen Lampentyp Innenraumleuchten mit hohem Wirkungsgrad und den insbesondere für Bildschirmarbeitsplätze geforderten Entblendungseigenschaften, auch hinsichtlich der Reflexblendung, schaffen lassen, ohne dabei notwendigerweise ein Spiegelraster einsetzen zu müssen. Dies erlaubt neue Gestaltungsmöglichkeiten, insbesondere auch im Hinblick auf die mögliche Bauhöhe. Für diese ist bei Spiegelrasterleuchten immer aus optischen Gründen eine entsprechende Bauhöhe vorgegeben. Im vorliegenden Fall entfällt diese konstruktive Beschränkung und bietet so dem Leuchtengestalter völlig neue Möglichkeiten, auch gestalterische Akzente zu setzen.

## Patentansprüche

1. Innenraumleuchte zum teilweise oder vollständigen Einbau in eine Raumdecke oder zum unmittelbaren Anbau an eine Raumdecke mit mindestens einer Lichtquelle (1, 1' bzw. 1") und mindestens einem senkrecht und quer zu dieser Lichtquelle angeordneten Lichtleiter (3), der auf einer seiner Lichtaustrittsseite zugeordneten Oberfläche, welche im ein- oder angebauten Zustand eine Unterseite bildet, eine Prismenstruktur (5) aufweist, wobei die aus Mikroprismen bestehende Prismenstruktur (5) derart ausgebildet ist, daß die Lichtausstrahlung der Innenraumleuchte einen insbesondere für Bildschirmarbeitsplätze vorgegebenen Ausblendwinkel nicht übersteigt, und wobei der Lichtquelle ein Dachreflektor zugeordnet ist, welcher bezüglich der Lichtquelle so angeordnet ist, daß das von der Lichtquelle abgegebene Licht aufgespalten wird, wobei ein erster Lichtstromanteil des von der Lichtquelle abgegebenen Lichts über den Dachreflektor (6) zu einer Lichtaustrittsöffhung abgegeben wird und ein zweiter Lichtstromanteil des von der Lichtquelle abgegebenen Lichts über den Lichtleiter abgegeben wird.

2. Innenraumleuchte nach Anspruch 1, **dadurch gekennzeichnet, daß** der Lichtquelle (1"') ein Gegenreflektor (7) zugeordnet ist, welcher die Lichtquelle gegen die Lichtaustrittsöffnung abdeckt.

3. Innenraumleuchte nach Anspruch 2, **dadurch gekennzeichnet, daß** der Dachreflektor (6) die Lampe von oben her teilweise derart umfaßt, daß der Außenrand von dem des Gegenreflektors (7) einen vorgegebenen Abstand aufweist.

4. Innenraumleuchte nach einem der Ansprüche 2 oder 3, **dadurch gekennzeichnet, daß** der Gegenreflektor (7) im Querschnitt halbschalenförmig ausgebildet ist und unterhalb der Lampe angeordnet ist.

5. Innenraumleuchte nach einem der Ansprüche 1 bis 4, **dadurch gekennzeichnet** durch einen der Lichtquelle (1, 1'; 1") zugeordneten Hauptreflektor (2, 2', 2"; 7).

6. Innenraumleuchte nach Anspruch 5, **dadurch gekennzeichnet, daß** der Hauptreflektor (7) einen Gegenreflektor bildet, welcher die Lichtquelle (1; 1'; 1") gegenüber einer Lichtaustrittsöffnung abdeckt.

7. Innenraumleuchte nach einem der Ansprüche 1 bis 6, **dadurch gekennzeichnet, daß** der Lichtquelle zugeordnet ein Hauptreflektor (2, 2', 2" bzw. 7) vorgesehen ist, der gemeinsam mit der Lichtquelle in Bezug auf einen zur Lichteintrittsfläche des Lichtleiters senkrechten und in Haupttransportrichtung des in diesen eingestrahlten Lichtes liegenden Querschnitt annähernd die Charakteristik eines Lambertschen Strahlers aufweist.

8. Innenraumleuchte nach Anspruch 6 oder 7, **dadurch gekennzeichnet, daß** der Hauptreflektor (2, 2', 2") im Querschnitt konzentrisch zur Lichtquelle (1, 1' bzw. 1") angeordnet ist, seine der Lichtquelle zugekehrte Innenfläche diffus reflektierend ausgebildet ist und mit mindestens einer Seitenkante an einer der Lichtquelle zugewandten Stirnseite des Lichtleiters (3) anliegt.

9. Innenraumleuchte nach einem der Ansprüche 6 bis 8, **dadurch gekennzeichnet, daß** der Hauptreflektor (2, 2', 2") mindestens in Teilbereichen seiner Oberfläche lichtdurchlässig ausgebildet ist.

10. Innenraumleuchte nach Anspruch 9, **dadurch gekennzeichnet, daß** die lichtdurchlässige Oberfläche des Hauptreflektors (2, 2', 2") transparent ausgebildet ist.

11. Innenraumleuchte nach einem der Ansprüche 1 bis 10, **dadurch gekennzeichnet, daß** der Lichtleiter (3), senkrecht zu der Haupttransportrichtung des sich in ihm ausbreitenden Lichtes betrachtet, eine konstante Dicke aufweist und mindestens auf der der Lichtquelle (1, 1', 1") abgewandten Stirnseite einen weiteren Reflektor (2' bzw. 4) trägt.

12. Innenraumleuchte nach Anspruch 11, **dadurch gekennzeichnet, daß** der Lichtleiter (3) als planparallele oder flächenparallel gewölbte Lichtleiterplatte ausgebildet ist.

13. Innenraumleuchte nach einem der Ansprüche 1 bis 12, **dadurch gekennzeichnet, daß** der Lichtleiter (3), in einer zu der Haupttransportrichtung des sich in ihm ausbreitenden Lichtes parallelen Ebene ein sich in dieser Haupttransportrichtung keilförmig verjüngendes Querschnittsprofil aufweist.

14. Innenraumleuchte nach einem der Ansprüche 1 bis 13, **dadurch gekennzeichnet, daß** die Lichtquelle (1, 1', 1 ") als eine langgestreckte Lampe ausgebildet ist, zu deren beiden Seiten je ein Lichtleiter (3) angeordnet ist und der Hauptreflektor (2) als ein die Lichtquelle konzentrisch umschließender Zylinder mit seitlichen Längsschlitzen ausgebildet ist, in die jeweils die der Lichtquelle zugewandte Stirnfläche je einer der Lichtleiter (3) plan abschließend eingesetzt ist.

15. Innenraumleuchte nach einem der Ansprüche 1 bis 14, **dadurch gekennzeichnet, daß** in der Leuchtenmittelebene, zueinander parallel liegend, nebeneinander zwei Lichtquellen (1") angeordnet sind, wobei jeder dieser Lichtquellen ein eigener Hauptreflektor (2") zugeordnet ist, an den jeweils ein Lichtleiter (3) stirnseitig angesetzt ist.

16. Innenraumleuchte nach einem der Ansprüche 1 bis 15, **dadurch gekennzeichnet, daß** die das in dem mindestens einen Lichtleiter (3) transportierte Licht auskoppelnde Prismenstruktur (5) in aneinandergrenzende Teilbereiche (51, 52) mit unterschiedlicher Lichtabstrahlcharakteristik gegliedert ist.

17. Innenraumleuchte nach einem der Ansprüche 1 bis 4, **dadurch gekennzeichnet, daß** die Lichtquelle als ringförmige Lampe (1"') ausgebildet ist und der Lichtleiter (3"), von der Lampe umschlossen, mit ihrem Querschnitt fluchtend angeordnet ist.

18. Innenraumleuchte nach Anspruch 17, **dadurch gekennzeichnet, daß** der der ringförmigen Lampe (1"') konzentrisch zugeordnete Hauptreflektor als ein im Querschnitt halbschalenförmig ausgebildeter Gegenreflektor (7) unterhalb der Lampe angeordnet ist und daß ferner ein Dachreflektor (6) vorgesehen ist, der bei kegelschnittähnlichem Querschnittsprofil die Lampe von oben her teilweise derart umfaßt, daß sein Außenrand von dem des Gegenreflektors einen vorgegebenen Abstand aufweist.

19. Leuchte nach einem der Ansprüche 1 bis 16, **dadurch gekennzeichnet, daß** die Lichtquelle (1; 1'; 1 ") eine langgestreckte Lichtquelle ist, wobei mindestens ein Lichtleiter senkrecht und quer zu der Längsachse dieser Lichtquelle angeordnet ist, der auf einer seiner Lichtaustrittsseite zugeordneten Oberfläche eine Prismenstruktur aufweist.

## Claims

1. Interior lighting for partial or complete installation in the ceiling of a room or for direct attachment to the ceiling of a room with at least one light source (1, 1' or 1"), and at least one light guide (3), arranged perpendicularly and transversely to this light source, which has a prism structure (5) on a surface assigned to its side for emerging light, which forms an underside in the installed or attached condition, the prism structure (5) consisting of microprisms being designed in such a way that the radiation of light from the interior lighting does not exceed a predetermined anti-dazzle angle, in particular for monitor workstations, and whereby an overhead reflector is assigned to the light source which is arranged in relation to the light source in such a way that the light emitted by the light source is split up, a first portion of the light flux of the light emitted by the light source being emitted via the overhead reflector (6) to a light outlet and a second portion of the light flux of the light emitted by the light source being emitted via the light guide.

2. Interior lighting according to claim 1, **characterised in that** the light source (1''') is assigned a counter-reflector (7), which covers the light source towards the light outlet.

3. Interior lighting according to claim 2, **characterised in that** the overhead reflector (6) partly encompasses the lamp from above in such a way that the outer edge has a predetermined distance from that of the counter-reflector (7).

4. Interior lighting according to one of claims 2 or 3, **characterised in that** the counter-reflector (7) is designed with a cross-section in the form of a half-shell and is arranged beneath the lamp.

5. Interior lighting according to one of claims 1 to 4, **characterised by** a main reflector (2, 2', 2"; 7) assigned to the light source (1, 1'; 1").

6. Interior lighting according to claim 5, **characterised in that** the main reflector (7) forms a counter-reflector, which covers the light source (1; 1'; 1") towards a light outlet.

7. Interior lighting according to one of claims 1 to 6, **characterised in that** a main reflector (2, 2', 2" or 7) assigned to the light source is provided, which, in common with the light source in relation to a cross-section perpendicular to the light entrance surface of the light guide and in the main transport axis of the light radiated therein, has approximately the characteristics of a Lambert emitter.

8. Interior lighting according to claim 6 or 7, **characterised in that** the main reflector (2, 2', 2") in cross-section is arranged concentrically to the light source (1, 1' or 1"), its inner surface facing towards the light source is designed to be diffusely reflective and abuts, with at least one side edge, on a front face of the light guide (3) facing towards the light source.

9. Interior lighting according to one of claims 6 to 8, **characterised in that** the main reflector (2, 2', 2") is designed to be translucent, at least in partial areas of its surface.

10. Interior lighting according to claim 9, **characterised in that** the translucent surface of the main reflector (2, 2', 2") is designed to be transparent.

11. Interior lighting according to one of claims 1 to 10, **characterised in that** the light guide (3), viewed perpendicularly to the main transport axis of the light dispersing therein, has a constant thickness and carries an additional reflector (2' or 4), at least on the front face facing away from the light source (1, 1', 1").

12. Interior lighting according to claim 11, **characterised in that** the light guide (3) is designed as plane-parallel or surface-parallel curved light guide plate.

13. Interior lighting according to one of claims 1 to 12, **characterised in that** the light guide (3), in a plane parallel to the main transport axis of the light dispersing therein, has a cross-section profile tapering in the form of a wedge in this transport axis.

14. Interior lighting according to one of claims 1 to 13, **characterised in that** the light source (1, 1', 1") is designed as an elongated lamp, to each side of which a light guide (3) is arranged and the main reflector (2) is designed as a cylinder, concentrically surrounding the light source, with lateral slots, in each of which there is inserted, so as to fit flush, the front face of each of the light guides (3) facing the light source.

15. Interior lighting according to one of claims 1 to 14, **characterised in that** two light sources (1'') are arranged in the light fitting centre plane, lying parallel to each other, side by side, each of these light sources being assigned its own main reflector (2''), on each of which a light guide (3) is attached to the front face.

16. Interior lighting according to one of claims 1 to 15, **characterised in that** the prism structure (5) outputting the light transported in the at least one light guide (3) is divided into adjacent partial areas (51, 52) with different light emission characteristics.

17. Interior lighting according to one of claims 1 to 4, **characterised in that** the light source is designed as an annular lamp (1''') and the light guide (3"), surrounded by the lamp, is arranged in alignment with its cross-section.

18. Interior lighting according to claim 17, **characterised in that** the main reflector concentrically assigned to the annular lamp (1''') is arranged underneath the lamp as a counter-reflector (7) with a cross-section in the form of a half-shell and that in addition an overhead reflector (6) is provided, which, the cross-section profile being similar to a conical section, partly encloses the lamp from above in such a way that its outer edge has a predetermined distance from that of the counter-reflector.

19. Light fitting according to one of claims 1 to 16, **characterised in that** the light source (1; 1'; 1") is an elongated light source, whereby at least one light guide is arranged perpendicularly and transversely to the longitudinal axis of this light source, which has a prism structure on a surface assigned to its side for emerging light.

## Revendications

1. Luminaire d'intérieur, destiné à être encastré en partie ou en totalité dans le plafond d'une pièce ou à être monté en applique directement sur un plafond d'une pièce, comportant au moins une source lumineuse (1, 1' ou 1") et au moins un conduit de lumière (3), qui est disposé perpendiculairement et transversalement à ladite source lumineuse et qui, sur une surface associée à sa face de sortie de la lumière et formant une face inférieure dans la position encastrée ou montée en applique, comporte une structure prismatique (5), sachant que ladite structure prismatique (5), formée par des microprismes, est réalisée de telle sorte que le rayonnement de la lumière du luminaire d'intérieur n'est pas supérieur à un angle d'émission prédéfini en particulier pour les postes de travail avec écran, et sachant qu'à la source lumineuse est associé un réflecteur supérieur, qui est disposé par rapport à la source lumineuse de telle sorte que la lumière émise par la source lumineuse est dédoublée, une première partie du flux lumineux de la lumière émise par la source lumineuse étant émise via le réflecteur supérieur (6) vers une ouverture de sortie de la lumière et une deuxième partie du flux lumineux de la lumière émise par la source lumineuse est émise via le conduit de lumière.

2. Luminaire d'intérieur selon la revendication 1, **caractérisé en ce qu'**à la source lumineuse (1''') est associée à un réflecteur indirect (7), qui masque la source lumineuse par rapport à l'ouverture de sortie de la lumière.

3. Luminaire d'intérieur selon la revendication 2, **caractérisé en ce que** le réflecteur supérieur (6) entoure partiellement la lampe depuis le haut, de telle sorte que le bord extérieur est situé à une distance prédéfinie de celui du réflecteur indirect (7).

4. Luminaire d'intérieur selon la revendication 2 ou 3, **caractérisé en ce que** le réflecteur indirect (7) est réalisé avec une section en forme de demi-coquille et est disposé en dessous de la lampe.

5. Luminaire d'intérieur selon l'une quelconque des revendications 1 à 4, **caractérisé par** un réflecteur principal (2, 2', 2" ; 7) associé à la source lumineuse (1, 1' ; 1").

6. Luminaire d'intérieur selon la revendication 5, **caractérisé en ce que** le réflecteur principal (7) forme un réflecteur indirect, qui masque la source lumineuse (1 ; 1' ; 1'') par rapport à une ouverture de sortie de la lumière.

7. Luminaire d'intérieur selon l'une quelconque des revendications 1 à 6, **caractérisé en ce qu'**il est prévu un réflecteur principal (2, 2', 2'' ; 7), qui est associé à la source lumineuse et qui, conjointement avec la source lumineuse, possède approximativement la caractéristique d'un projecteur à émission lambertienne par rapport à une section perpendiculaire à la surface d'entrée de la lumière du conduit de lumière et située dans la direction principale de transport de la lumière émise dans celui-ci.

8. Luminaire d'intérieur selon la revendication 6 ou 7, **caractérisé en ce que** le réflecteur principal (2, 2', 2'') est disposé, selon une coupe transversale, concentriquement à la source lumineuse (1, 1' ou 1''), sa surface intérieure dirigée vers la source lumineuse produit une réflexion diffuse et il prend appui avec au moins un bord latéral sur une face frontale du conduit de lumière (3), orientée vers la source lumineuse.

9. Luminaire d'intérieur selon l'une quelconque des revendications 6 à 8, **caractérisé en ce que** le réflecteur principal (2, 2', 2'') est réalisé de manière à laisser passer la lumière au moins dans des portions de sa surface.

10. Luminaire d'intérieur selon la revendication 9, **caractérisé en ce que** la surface du réflecteur principal (2, 2', 2'') qui laisse passer la lumière est transparente.

11. Luminaire d'intérieur selon l'une quelconque des revendications 1 à 10, **caractérisé en ce que** le conduit de lumière (3), considéré perpendiculairement à la direction principale de transport de la lumière qui s'y propage, a une épaisseur constante et porte un autre réflecteur (2' ou 4) au moins sur la face frontale opposée à la source lumineuse (1, 1', 1'').

12. Luminaire d'intérieur selon la revendication 11, **caractérisé en ce que** le conduit de lumière (3) est réalisé sous la forme d'une plaque conductrice de lumière à faces planes et parallèles ou courbes et parallèles.

13. Luminaire d'intérieur selon l'une quelconque des revendications 1 à 12, **caractérisé en ce que** le conduit de lumière (3) comporte, dans un plan parallèle à la direction principale de transport de la lumière qui s'y propage, un profil de section se rétrécissant en forme de clavette dans ladite direction principale de transport.

14. Luminaire d'intérieur selon l'une quelconque des revendications 1 à 13, **caractérisé en ce que** la source lumineuse (1, 1', 1'') est réalisée sous la forme d'une lampe allongée, de part et d'autre de laquelle est disposé respectivement un conduit de lumière (3), et le réflecteur principal (2) est réalisé sous la forme d'un cylindre entourant concentriquement la source lumineuse et muni de fentes longitudinales latérales, dans chacune desquelles est enfichée, de manière à former une fermeture plane, la surface frontale, dirigée vers la source lumineuse, de chacun des conduits de lumière (3).

15. Luminaire d'intérieur selon l'une quelconque des revendications 1 à 14, **caractérisé en ce que** deux sources lumineuses (1'') sont disposées l'une à côté de l'autre parallèlement l'une à l'autre dans le plan médian du luminaire, sachant qu'à chacune desdites sources lumineuses est associé son propre réflecteur principal (2''), sur lequel est monté du côté frontal un conduit de lumière (3).

16. Luminaire d'intérieur selon l'une quelconque des revendications 1 à 15, **caractérisé en ce que** la structure prismatique (5), émettant la lumière transportée dans ledit au moins un conduit de lumière (3), est structurée en portions (51, 52) adjacentes ayant chacune une caractéristique d'émission de lumière différente.

17. Luminaire d'intérieur selon l'une quelconque des revendications 1 à 4, **caractérisé en ce que** la source lumineuse est réalisée sous la forme d'une lampe annulaire (1'''), et le conduit de lumière (3''), entouré par la lampe, est situé à fleur de la section de celle-ci.

18. Luminaire d'intérieur selon la revendication 17, **caractérisé en ce que** le réflecteur principal, associé concentriquement à la lampe annulaire (1''') et réalisé sous la forme d'un réflecteur indirect (7) avec une section en forme de demi-coquille, est disposé en dessous de la lampe, et **en ce que**, en outre, il est prévu un réflecteur supérieur (6) qui, avec un profil de section similaire à une section conique, entoure partiellement la lampe depuis le haut, de telle sorte que son bord extérieur est situé à une distance prédéfinie de celui du réflecteur indirect.

19. Luminaire d'intérieur selon l'une quelconque des revendications 1 à 16, **caractérisé en ce que** la source lumineuse (1 ; 1' ; 1'') est une source lumineuse allongée, sachant qu'au moins un conduit de lumière est disposé perpendiculairement et transversalement à l'axe longitudinal de ladite source lumineuse, ledit conduit de lumière ayant une structure prismatique sur une surface associée à sa face de sortie de la lumière.
